Europäisches Patentamt

(19) European Patent Office

Office européen des brevets

(11) Publication number: **0 151 333**
**A1**

## EUROPEAN PATENT APPLICATION

(21) Application number: 84300641.2

(22) Date of filing: 01.02.84

(51) Int. Cl.⁴: **B 65 G 57/30**
**B 07 C 5/14**

(43) Date of publication of application:
14.08.85 Bulletin 85/33

(84) Designated Contracting States:
DE FR GB SE

(71) Applicant: KOCKUMS INDUSTRIES (AUST.) PTY. LTD.
188 Northbourne Road
Campbellfield, 3061 Victoria(AU)

(72) Inventor: Ackerfeldt, Bengt Ake
5 Caprice Court Templestowe 3106
Victoria(AU)

(72) Inventor: Dolphin, John Robert
7 Tormore Road Boronia 3155
Victoria(AU)

(74) Representative: Topps, Ronald et al,
D. YOUNG & CO 10 Staple Inn
London WC1V 7RD(GB)

(54) Process and apparatus for stacking articles.

(57) A process and apparatus for stacking articles (10, 11, 12, 13, 14) particularly timber in which a first article (10) is fed along conveyor chains (22) to a stacking station (20). Lifting forks (28) raise the article (10) above the conveyor chains (22) and supporting plates (27) hold the one-article stack (15) in the raised position. Forks (28) are lowered for a second article (11) which is raised immediately below the first article (10) and the supporting plates (27) are removed so that the first article (10) drops onto the second article (11). This process is repeated until the required height of the stack (15) is reached. Several stacks (16) can be assembled at an assembling station (40); (41) before transfer laterally from the apparatus.

./...

# PROCESS AND APPARATUS FOR STACKING ARTICLES 0151333

This invention relates to a process and apparatus for stacking articles. The invention has been particularly developed for the stacking of the dressed timber output from a planing mill, such output being sorted and stacked according to the size and grade of the timber, however the process and apparatus of the invention is not limited to this particular use.

The output of a timber saw mill is usually sorted according to the size and grade of the timber and the sorted timber is then dried, e.g. in a kiln. The dried timber can then be dressed in a planing mill and the output of dressed timber from the planing mill is sorted again according to size (width, thickness and length) and grade and the sorted timber is stacked and bound with metal ties. In many mills the output of dressed timber from the planing mill is of relatively low volume and consequently mechanised sorting has not been economical.

Processes and apparatus for sorting timber have been known in the past. A first known arrangement includes a hooked conveyor which carries each timber piece by a respective hook suspended beneath the conveyor. The size and grade of the timber can be either manually or electronically assessed and the individual pieces of timber are dropped from the conveyor hooks under manual or automatic control into holding bins located beneath the hooked conveyor. The holding bins have discharge openings in the bottoms thereof and when a particular bin holding a particular size and grade of timber is full, the contents of the bin are discharged through the bottom onto a lower conveyor which carries the timber to a stacking and binding station. This particular apparatus is not suitable for use with dressed timber because dropping the timber from the hooked conveyor into the holding bins damages the timber.

Another known timber sorting apparatus includes a feed conveyor which sequentially supplies individual pieces of timber to an inclined ramp having a plurality of trap-doors which are selectively opened to receive respective pieces of timber according to size and grade. Behind each trap-door is a respective holding tray each being for receiving timber pieces of one particular size and grade. This apparatus can

2    **0151333**

have up to fifteen trays in a vertically spaced relationship. This particular kind of apparatus is very expensive.

Manual sorting and stacking of timber according to size and grade is also known.  This is usually achieved by feeding timber on a conveyor and sorters positioned on one or both sides of the conveyor draw appropriate sizes and grades of timber laterally from the conveyor onto stacking tables along the length of the conveyor. Again manual sorting is expensive due to the labour costs involved.

It is an object of the present invention to provide a process and apparatus for stacking articles which can provide economies compared  to the prior art and which can be adapted for use with the stacking of articles which could be damaged in prior stacking systems.

According to the present invention there is provided a process of stacking articles including the steps of:

(a)    feeding a first article to a stacking station,

(b)    supporting the first article at the stacking station to make a one-article stack,

(c)    feeding a second article to the stacking station,

(d)    relatively lowering the one-article stack onto the second article to increase the stack height to two articles, and

(e)    supporting the two-article stack at the stacking station. Steps (c), (d) and (e) may be repreated at least once each to form a stack of three or more articles.  This process of adding the second and any subsequent articles to the bottom of a stack enables the stacking of articles which could be damaged by other stacking processes.

Preferably the step of supporting the first article comprises lifting the first article above a level at which it is fed to the stacking station and then supporting the lifted article.  In this case, the step of relatively lowering the stack preferably comprises lifting the latest article from the level at which it is fed to the stacking station to a position immediately below the raised supported stack and withdrawing the support from the stack allowing the latest article located immediately below the stack to be added to the bottom thereof to increase the stack height by one article.

The present invention also provides apparatus for stacking articles and including: feeding means for feeding sequentially a plurality of articles to a stacking station, supporting means for supporting at the stacking station a first article fed thereto to make a one-article stack, and lowering means for relatively lowering the one-article stack onto a second article fed to the stacking station by the feeding means to increase the stack height to two articles, the supporting means being operable to support at the stacking station the resulting two-article stack.

The lowering means preferably is operable to relatively lower the stack onto a third or subsequent article fed to the stacking station by the feeding means to increase the stack height by one article, the supporting means being operable to support at the stacking station the resulting increased stack height.

The lowering means preferably includes an article lifter operative to lift each article to be added to the stack from the level at which it is fed to the stacking station to a position immediately below the supported stack, the lowering means also including releasing means for releasing the supporting means so that the stack is dropped onto the article carried by the lifter to thereby increase the stack height, the supporting means then being operable to support the increased height stack and the article lifter being arranged to be lowered preparatory to lifting a subsequently fed article. The article lifter may comprise one or more lifting forks arranged to engage each article at the feed level and to lift the article from beneath.

The apparatus may further include a stack assembling station where a plurality of stacks formed at the stacking station can be assembled, the stack assembling station being located adjacent the stacking station so that completed stacks of the required height can be assembled before transfer from the stacking apparatus. In one possible embodiment the stack assembling station includes an assembly support for supporting a plurality of stacks, the assembly support being located above the feeding means and spaced longitudinally from the stacking station in the general direction from which the feeding means feeds articles to the stacking station, so that the articles are fed to the stacking station along a path extending beneath the assembly support. The apparatus may include transfer means for transferring each stack formed at the stacking station to the assembling station, the transfer means including a transfer carriage mounting the support means and stack lowering means, the transfer carriage being selectively movable for transferring the stack from the stacking station to the assembling station and for return to the stacking station.

The invention may also provide an article processing apparatus including a plurality of stacking apparatus each according to the present invention, the plurality of stacking apparatus sharing a common feeding means arranged so that articles can be fed to and stacked at a first stacking apparatus or can be fed past the first stacking apparatus and fed to a second or subsequent stacking apparatus.

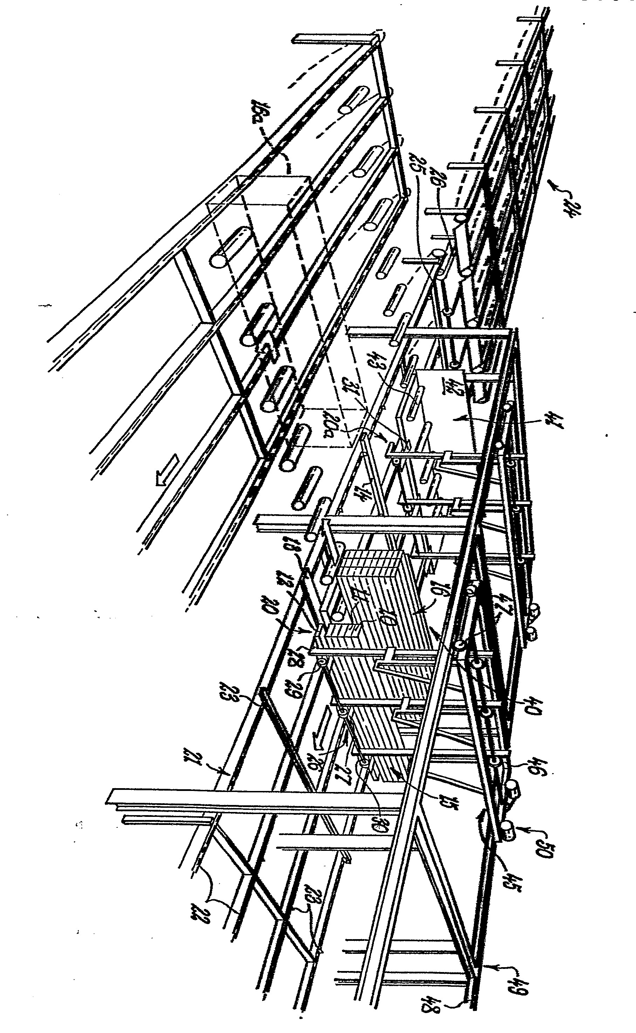

An embodiment of the present invention will now be described, by way of an example, with reference to the accompanying drawings, in which the single figure shows a perspective view of an embodiment of a timber processing and stacking apparatus. However it will be appreciated that the present invention is not limited to the particular arrangement illustrated.

Firstly, there will be briefly described with reference to the drawing a possible preferred timber stacking process according to the present invention. The process comprises feeding a first timber piece 10 to the stacking station 20, supporting the first timber piece 10 at the stacking station 20 to make a one-piece stack, feeding a second piece 11 to the stacking station 20, relatively lowering the stack 15 (consisting of timber piece 10) onto the second piece 11 to increase the height of stack 15 to two pieces 10, 11, and supporting the two-piece stack 15 at the stacking station 20. This process is repeated to form a stack 15 of the required height. For example, the drawing shows piece 12 about to be added to the bottom of stack 15.

The step of supporting the first piece 10 at the stacking station 20 comprises lifting the piece 10 above the level at which the piece 10 is fed to the stacking station 20 and then supporting the lifted piece 10 in the raised position. Both the lifting and supporting of each timber piece are effected from beneath the piece so that identical or

**0151333**

generally similar apparatus can be used for different piece shapes and sizes. With this preferred method of lifting and supporting in a raised position, the second and subsequent pieces can be fed to a location directly below the raised supported stack 15.

In the illustrated arrangement the step of relatively lowering the stack 15 onto the second or subsequent timber piece comprises lifting the second or subsequent piece from the level at which it is fed to the stacking station 20 to a position immediately below the raised supported stack 15 (as with timber piece 12) and withdrawing the support from the stack 15 allowing the latest piece 12 located immediately beneath the stack 15 to be added to the bottom of the stack. The stack 15 of increased height so formed may then be lifted sufficiently to allow a subsequently fed article (say, article 14) to be lifted from the feed level to a position immediately below the stack 15. The stack 15 so formed is then supported in the raised position. Preferably the addition of the second or subsequent piece (11, 12, 14 etc) to the stack 15 is achieved by withdrawing the support from beneath the stack 15 so that the stack drops a short distance onto the second or subsequent piece. In the case of flat articles such as the illustrated pieces of timber, this dropping of the stack 15 through a short distance will not damage the articles since the force of impact caused by dropping the stack 15 can be spread over substantially the full surface area of the articles.

The stacking process may also include the further step of assembling a plurality of stacks 15 at a stack assembling station 40 located adjacent the stacking station 20. This enables a plurality of stacks 15 to be assembled before further operations are carried out such as binding of a plurality of stacks together in the case of timber stack forming.

The stacking process can be carried out at each of a plurality of stacking stations 20,20a arranged in series and sharing a common article feed enabling different articles to be sequentially fed and similar articles to be lifted and stacked at respective stacking stations.

Turning now to a description of the apparatus illustrated in the drawing, the apparatus includes feeding means 21 for feeding sequentially a plurality of articles 10, 11, 12,

0151333

13, 14 to a stacking station 20. The feeding means 21 comprises a feed conveyor 25. The feed conveyor 25 provides means for positive location of each article facilitating automation of the stacking operation. In the illustrated example, the feed conveyor 25 comprises a plurality of generally parallel laterally spaced feed conveyor chains 22 having upstanding dogs 23 for positive location of each article. That is, each article will extend across adjacent feed chains 22 in contact with the dogs 23 which are regularly spaced along the lengths of the chains 22. In the case of timber stacking, the output of pieces of timber from a saw mill or planing mill can be arranged generally transverse to the direction of travel of a mill output conveyor 24 which is arranged to feed sequentially pieces of timber to the feed conveyor 25 of the stacking apparatus. Between the mill output conveyor 24 and the feed conveyor 25 there is provided an accelerating conveyor 26 onto which the pieces of timber from the mill output conveyor 24 are fed, the accelerating conveyor 26 being run at a higher speed than the feed conveyor 25 and being operative to discharge sequentially timber pieces on to the feed conveyor 25 at a higher speed than the speed of travel of the feed conveyor 25 so that the pieces of timber will be thrown against the upstanding dogs 23 and thereby be positively located at regular predetermined intervals on the feed conveyor 25.

The stacking apparatus also includes means 26 for supporting a first article 10 at the stacking station 20 to make a first article of a stack 15. The supporting means 26 is operative to support the stack 15 from beneath so that the apparatus can be used for stacking of different articles and for producing different stack heights without the need to substantially modify the apparatus. The supporting means 26 comprises a plurality of supporting plates 27 arranged to be located underneath and in contact with the bottom of the lowest article in the stack 15 so as to thereby support the stack 15. In the case of timber stacking the plurality of supporting plates 27 are spaced along the lengths of the timber pieces.

The apparatus also includes means for relatively lowering the stack 15 onto the second or subsequent article 11,12,14 etc to increase the stack height. The lowering means

0151333

comprises an article lifter 28 operative to lift the second and subsequent articles 11, 12, 14 etc from the level at which they are fed to the stacking station 20.  The article lifter 28 is operative to lift the second and subsequent articles to a point immediately below the supported stack 15. The lowering means also includes means 29 for releasing the supporting means 26 so that the stack 15 is dropped onto the second or subsequent article 11, 12, 14 to thereby increase the stack height.  After thus increasing the stack height by one article the supporting means 26 can be operated to support the increased height stack 15 and the article lifter 28 can be lowered preparatory to lifting a subsequently fed article.

The article lifter 28 is operative to lift the fed articles from beneath.  The article lifter 28 illustrated comprises one or more lifting forks which engage the article at the feed level.  In the case of the feeding means 21 being a chain conveyor 25, each fork is arranged to be lowered between respective adjacent chains 22 below the upper run level of the chains 22 and operative so that when an article (say 12) reaches the lowered lifting forks the lifting forks can be raised to lift the article 12 from the chain conveyor 25.

The releasing means 29 for the supporting means 26 is operative to withdraw the supporting means 26 from beneath the stack 15 allowing the stack 15 to drop a short distance onto the article 12 lifted and held by the article lifter 28. The releasing means 29 may be of any suitable construction. For example, in the case of supporting plates 27 constituting the supporting means 26, the releasing means 29 may comprise pneumatic or hydraulic actuators (not shown) selectively operable to withdraw the supporting plates 27 from beneath the stack 15. Alternatively, and as illustrated, the supporting plates 27 may be mounted on respective endless chains 30 with end portions 31 of the supporting plates 27 projecting beyond a longitudinal limit of the chain path and arranged so that the projecting end portions 31 of the plates 27 support the stack 15.  In this arrangement rotation of the chains 30 will withdraw the supporting plates 27 from  their extended supporting positions thus allowing the stack 15 to drop.  Continued rotation of the chains 30 will bring the supporting plates 27 back to their supporting positions from beneath the latest and lowermost article of the stack 15 thus raising the entire stack 15 with the lowermost added article back to the supporting position and enabling the lifting forks to be lowered for collection of a subsequent article.

In this preferred arrangement of lowering means, the first article 10 fed to the stacking station 20 will be lifted by the lifting forks to a level slightly below the stack supporting level. The supporting means 26 will be engaged with the first article 10 so as to support it from beneath, the supporting means 26 lifting the first article 10 above the lifting forks. The lifter 28 can then be lowered for the second article 11 fed to the stacking station 20. The second article 11 will be lifted to a point immediately below the supported first article 10 and the releasing means 29 will be operated to release the support from the first article 10 allowing it to drop a short distance onto the second article 11. Again the supporting means 26 will be operated to engage underneath the second article 11 and lift the two article stack 15 a distance above the lifting forks, allowing the lifting forks to be lowered for a third article. This operation can be repeated until the required stack height is reached.

The stacking apparatus in the preferred embodiment also includes a stack assembling station 40 where a plurality of stacks 16 formed at the stacking station 20 can be assembled before transfer of the assembled stacks 16 from the apparatus. The stack assembling station 40 is located adjacent the stacking station 20 so that completed stacks 15 of the required height can be assembled before transfer from the stacking apparatus. The stack assembling station 40 preferably includes an assembly support 41 for supporting a plurality of stacks 16 for example in side by side relationship. The assembly support 41 is located above the feed conveyor 25 and spaced longitudinally from the stacking station 20 in the direction from which the articles are fed. That is, the articles are fed to the stacking station 20 along a path extending beneath the assembling station 40. The assembly support 41 includes a backing plate 42 against which the first stack of the assembly 16 is located, subsequent stacks 15 being abutted against the previously assembled stack or stacks. The assembly support 41 also includes a plurality of generally parallel assembly rollers 43 on which the stacks 15 are assembled, the axes of the rollers 43 being arranged generally longitudinally so that the assembly of stacks 16 can be transferred laterally from the assembling station 40. In the case of timber stacking, a plurality of timber stacks 16 can be assembled together and transferred laterally on the rollers 43 so that the assembly of stacks (shown at 16a in broken line) can be passed to a binding station or palletising station for example.

The· stacks 15 formed at the stacking station 20 may be transferred to the assembling station by any suitable transfer means 45. The transfer means 45 illustrated includes a transfer carriage 46 on which the supporting means 26 and stack lowering means (28,29) are mounted. The carriage 46 is movable longitudinally on bogie wheels 47 which run on rails 48 carried by an overhead support frame 49.

In the preferred embodiment the stacking apparatus also includes drive means 50 for the various components. The drive means 50 may be of any suitable construction and operation. For example, electric motors and/or pneumatic or hydraulic actuators may be used for effecting the various movements of the components. The drive means 50 is illustrated mounted on the transfer carriage 46 and the drive may be transmitted to the movable components in any suitable way.

In the illustrated apparatus a plurality of stacking apparatus  according to the present invention are provided in a single article processing apparatus, the plurality of stacking apparatus sharing a common feeding means 21. In the case of timber stacking according to size and grade, the plurality of stacking apparatus are arranged in series along the length of feed conveyor 25, each stacking apparatus being arranged to lift timber pieces of the same size and grade from the conveyor 25 and to stack the timber. Since many pieces of timber can be produced, for example at the output of a planing mill, only sufficient stacking apparatus for the most common grades and sizes of timber may be provided. In this case, the less common sizes and grades of timber (e.g. piece 13) can be manually sorted and stacked after having passed through the series of stacking apparatus.

The operation of the stacking apparatus according to the preferred embodiment of the present invention and used for stacking of timber pieces can be understood from the preceding description. However, by way of summary the operation is as follows.

Timber pieces are fed sequentially on the feed conveyor chains 22 to the stacking apparatus. When a piece of timber (say piece 10) of the required size and grade approaches the apparatus, the lifting forks 28 are lowered between the adjacent feed conveyor chains 22 so that the piece of timber 10 is carried by the feed conveyor chains 22 to a position above the lifting forks 28. The forks 28 then lift the piece of timber 10 above the feed conveyor 25 and the supporting plates 27 are positioned beneath the piece of timber 10 and raise the timber 10 above the lifting forks 28 and support the timber 10 in that position. A subsequent piece of timber 11 of the same size and grade can then be lifted from the feed conveyor 25 by again lowering the lifting forks 28 to below the level of the feed conveyor chains 22. This second piece of timber 11 is lifted by the lifting forks 28 above the level of the feed conveyor chains 22 and to a position immediately below the first piece of timber 10. The supporting plates 27 are withdrawn from the first piece of timber 10 which drops a short distance onto the second piece of timber 11 on the lifting forks 28. The supporting plates 27 are then positioned beneath the second piece of timber 11 and the stack 15 consisting of the two pieces of timber 10,11 is then raised and supported above the lifting forks 28. This operation is repeated until the required number of pieces of timber is contained in the stack 15. The transfer carriage 46 is then moved longitudinally to place the stack 15 against the backing plate 42 and on the assembly rollers 43 of the stack assembling station 40. The transfer carriage 46 is then returned so that a second stack 15 can be formed at the stacking station. The process of assembling stacks is repeated until the required number of stacks 15 is assembled and the assembly 16 can then be transferred laterally from the apparatus for further processing.

The preferred embodiment of the stacking apparatus described herein is suitable for use with existing conveyor feeds in saw mills. Also, a plurality of such apparatus can be used for the most common sizes and grades of timber while manual sorting and stacking is used for the less common sizes and grades where the economics would not favour installation of additional stacking apparatus for every size and grade. The positive location of timber pieces on the feed conveyor 25 enables manual and/or automatic coding of the size and grade of the timber so that the stacking and assembling operations can be carried out under computer or microprocessor control.

Throughout the specification, the apparatus has been generally described when used for producing a stack or an assembly of stacks of the same size and grade of timber. However frequently in saw mills a special batch is made up to fill a specific customer order, such a batch consisting of mixed sizes and grades of timber. Such batches are known as "house lots". It will be appreciated that the stacking apparatus of the present invention can be used to make up such mixed stacks or assemblies of stacks. The making up of mixed orders may be under programmed computer control or under manual control. Also the use of the apparatus for making up mixed orders is not limited to timber articles, but may be applicable to other stackable articles of differing sizes and/ or types.

It will be appreciated that the particularity of the embodiment shown in the drawings is not limiting on the invention and that many changes could readily be made. For example, the drawings show the supporting means 26 carried by the article lifter 28 above the level of the lifting forks so that the supporting stack 15 is raised and lowered with the forks. However, the forks may be movable independently of the supporting means 26 which would support the stack 15 at a constant height above the feed conveyor 25.

Finally, it is to be understood that various alterations, modifications and/or additions may be made to the construction, arrangement and operation of the present invention as herein described without departing from the scope of the present invention as defined in the appended claims.

12

**0151333**

## CLAIMS

1.    A process of stacking articles including the steps of:

(a)    feeding a first article (10) to a stacking station (20),

(b)    supporting the first article (10) at the stacking station (20) to make a one-article stack (15),

(c)    feeding a second article (11) to the stacking station (20),

(d)    relatively lowering the one-article stack (15) onto the second article (11) to increase the stack height to two articles, and

(e)    supporting the two-article stack (15) at the stacking station (20).

2.    A process as claimed in claim 1 and further including the step of:

(f)    repeating steps (c), (d) and (e) at least once each to form a stack of three or more articles.

3.    A process as claimed in claim 1 or claim 2, wherein the step of supporting the first article (10) comprises lifting the first article (10) above a level at which it is fed to the stacking station (20) and then supporting the lifted article.

4.    A process as claimed in claim 3, wherein the step of relatively lowering the stack (15) comprises lifting the latest article from the level at which it is fed to the stacking station to a position immediately below the raised supported stack (15) and withdrawing the support (27) from the stack (15) allowing the latest article located immediately below the stack (15) to be added to the bottom thereof to increase the stack height by one article.

5.    A process as claimed in claim 4, wherein the increased height stack is lifted sufficiently to allow a subsequently fed article to be lifted from the level at which it is fed to the stacking station to a position immediately below the increased height stack.

6.    A process as claimed in any one of claims 3 to 5, wherein both the lifting and supporting of each article fed to the stacking station are effected from beneath the article.

7. A process as claimed in claim 6, wherein the addition to the stack of the second or subsequent article is achieved by withdrawing the support (27) from beneath the stack so that the stack drops onto the second or subsequent article.

8. A process as claimed in any preceding claim, and further including the step of assembling a plurality of stacks (16) at a stack assembly station (40) located adjacent to the stacking station (20).

9. Apparatus for stacking articles including:

feeding means (21) for feeding sequentially a plurality of articles to a stacking station (20),

supporting means (26) for supporting at the stacking station (20) a first article (10) fed thereto to make a one-article stack (15),

lowering means for relatively lowering the one-article stack (15) onto a second article (11) fed to the stacking station (20) by the feeding means (21) to increase the stack height to two articles, the supporting means (26) being operable to support at the stacking station the resulting two-article stack (15).

10. Apparatus as claimed in claim 9, wherein the lowering means is operable to relatively lower the stack (15) onto a third or subsequent article (12) fed to the stacking station (20) by the feeding means (21) to increase the stack height by one article, the supporting means (26) being operable to support at the stacking station (20) the resulting increased height stack (15).

11. Apparatus as claimed in claim 9 or claim 10, wherein the feeding means (21) comprises a feed conveyor (24) having locating means (23) for positively locating each article supported on the conveyor.

12. Apparatus as claimed in claim 11, wherein the feed conveyor (24) comprises a plurality of generally parallel laterally spaced feed conveyor chains (22) having locating means (23) comprised by upstanding dogs for positive location of each article supported on the conveyor chains, the apparatus further including an accelerating conveyor (26) for sequentially receiving thereon articles to be stacked, the accelerating conveyor (26) being operable at a higher speed than the feed conveyor (24) so as to discharge sequentially articles onto the feed conveyor (24) at a higher speed than the speed of the feed conveyor (24) so that the articles will be thrown against the upstanding dogs and thereby be positively located at regular predetermined intervals on the feed conveyor.

13.  ·Apparatus as claimed in any one of claims 9 to 12, wherein the supporting means (26) is operable to support the stack (15) from beneath the lowermost article of the stack.

14.  Apparatus as claimed in any one of claims 9 to 13, wherein the lowering means includes an article lifter (28) operative to lift each article to be added to the stack from the level at which it is fed to the stacking station (20) to a position immediately below the supported stack, the lowering means also including releasing means (29) for releasing the supporting means so that the stack (15) is dropped onto the article carried by the lifter (28) to thereby increase the stack height, the supporting means then being operable to support the increased height stack and the article lifter being arranged to be lowered preparatory to lifting a subsequently fed article.

15.  Apparatus as claimed in claim 14, wherein the article lifter (28) comprises one or more lifting forks arranged to engage each article at the feed level and to lift the article from beneath.

16.  Apparatus as claimed in claim 14 or claim 15, wherein the supporting means comprises one or more supporting plates (27) and the releasing means is selectively operable to withdraw the supporting plate (27) from beneath the stack (15) allowing the stack to drop onto the article carried by the article lifter (28).

17.  Apparatus as claimed in claim 16, wherein the or each supporting plate (27) is mounted on a respective endless chain (30) with an end portion of the supporting plate (27) projecting beyond a longitudinal limit of the chain path and arranged so that the projecting end portion of the plate (27) provides support from the stack (15), the arrangement being such that selective rotation of the chain (30) causes withdrawal of the supporting plate (27) from its projecting supporting position thus allowing the stack (15) to drop and continued rotation of the chain (30) will bring the supporting plate (27) back to its supporting position from beneath the latest added lowermost article of the stack thus raising the entire stack (15) back to a raised supported position and enabling the article lifter (28) to be lowered for a subsequently fed article.

18.    Apparatus as claimed in any one of claims 9 to 17, and further including a stack assembling station (40) where a plurality of stacks (15) formed at the stacking station (20) can be assembled, the stack assembling station (40) being located adjacent the stacking station (20) so that completed stacks (15) of the required height can be assembled before transfer from the stacking apparatus.

19.    Apparatus as claimed in claim 18, wherein the stack assembling station (40) includes an assembly support (41) for supporting a plurality of stacks (16), the assembly support (41) being located above the feeding means and spaced longitudinally from the stacking station (20) in the general direction from which the feeding means feeds articles to the stacking station, so that the articles are fed to the stacking station along a path extending beneath the assembly support (41).

20.    Apparatus as claimed in claim 19, wherein the assembly support (41) includes a backing plate (42) against which the first stack (15) of the assembly (16) is located, subsequent stacks (15) being abutted against the previously assembled stack or stacks, the assembly support further including a plurality of generally parallel assembly rollers (43) on which the stacks are assembled, the axes of the rollers (43) being arranged generally longitudinally so that the assembly of stacks can be transferred laterally from the assembling station (40).

21.    Apparatus as claimed in any one of claims 18 to 20, wherein the apparatus includes transfer means (45) for transferring each stack formed at the stacking station (20) to the assembling station (40), the transfer means (45) including a transfer carriage (46) mounting the supporting means and

16

0151333

stack lowering means, the transfer carriage (46) being selectively movable for transferring the stack from the stacking station (20) to the assembling station (40) and for return to the stacking station.

22. Article processing apparatus including a plurality of stacking apparatus each according to any one of claims 9 to 21, the plurality of stacking apparatus sharing a common feeding means arranged so that articles can be fed to and stacked at a first stacking apparatus or can be fed past the first stacking apparatus and fed to a second or subsequent stacking apparatus.

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 416 060  (FÖRDERTECHNIK HAMBURG HARRY LASSIG)<br><br>* page 4, line 28 - page 6, line 15; figures * | 1-3,7, 9,10, 22 | B 65 G   57/30<br>B 07 C    5/14 |
| X | US-A-3 231 101  (COOPER)<br><br>* claims 1,2; figures * | 1-7,9, 10,13-16 | |
| A | FR-A-1 587 477  (FMC CORP.)<br><br>* Page 4, line 20 - page 5, line 1; figures * | 1,2,6, 11-13, 15 | |
| A | DE-A-2 404 514  (MENY)<br><br>* page 6, line 9 - page 7, line 9 * | 1,8,18 ,20,21 | **TECHNICAL FIELDS SEARCHED (Int. Cl. ³)**<br><br>B 65 G     1<br>B 07 C<br>B 27 B<br>B 27 M |
| A | FR-A-1 242 664  (AG PARQUETERIE et al.) | | |

The present search report has been drawn up for all claims

| Place of search | Date of completion of the search | Examiner |
|---|---|---|
| THE HAGUE | 25-09-1984 | VAN ROLLEGHEM F.M. |